# EUROPÄISCHE PATENTSCHRIFT

(11) **EP 1 529 880 B1**
(45) Veröffentlichungstag und Bekanntmachung des Hinweises auf die Patenterteilung: **17.08.2016**
(21) Anmeldenummer: 03025832.1
(22) Anmeldetag: 10.11.2003
(51) Int. Cl.: E01B 7/24, E01C 11/26, F24J 3/08, F28D 15/02

(54) **Weichenbeheizungsanlage**
Heating arrangement for a railway switch
Installation de chauffage pour aiguillage

(43) Veröffentlichungstag der Anmeldung: 11.05.2005
(73) Patentinhaber: Feldmann, Wolfgang, 22145 Hamburg (DE)
(72) Erfinder: Feldmann, Wolfgang, 22145 Hamburg (DE)
(74) Vertreter: Hansen, Jochen

(56) Entgegenhaltungen:
- EP-A- 1 262 597
- DE-A- 3 037 721
- US-A- 1 423 965
- US-A- 2 704 517
- PATENT ABSTRACTS OF JAPAN Bd. 0040, Nr. 13 (M-090), 30. Januar 1980 (1980-01-30) -& JP 54 149104 A (MITSUBISHI ELECTRIC CORP), 22. November 1979 (1979-11-22)

## Beschreibung

Die Erfindung betrifft eine Weichenbeheitungsanlage gemäß Anspruch 1 und ermöglichteine fremdsteuerungs-, verschleiß- und wartungsfreie, selbstgeregelte Beheizung von Weichen ohne zusätzliche mit Fremdenergie angetriebene Pumpen und ohne bewegte Teile, unter Nutzung von Erdwärme auch bei Nutzung eines nur geringen Temperaturgefälles zwischen der Erdwärme und dem Gefrierpunkt von Wasser.

Es ist bekannt, dass Weichen und ähnliche Anlagen im Eisenbahnbau, elektrisch oder seltener mit Gas- (Weichen auf nicht elektrifizierten Eisenbahnstrecken) oder Ölbrennern beheizt werden, um im Winter das Einfrieren der beweglichen Teile und damit schwere Betriebsstörungen zu verhindern. Dies ist mit einem hohen Energieverbrauch und hohen Energiekosten verbunden.

Zur Energiekostensenkung werden teilweise bereits aufwendige, intelligente Steuerungen eingesetzt, so dass die Anlagen nicht permanent, ab Unterschreitung bestimmter Temperaturen, beheizt werden. So werden bei den beheizten Weichen auch Parameter wie Luftfeuchtigkeit berücksichtigt. In jedem Fall werden die Weichenheizungen ein- und ausgeschaltet, manuell oder sensorgesteuert.

Bei einem beispielhaften Temperatursturz von etwas oberhalb der üblichen Einschalttemperatur der Heizung, etwa 5° C, auf -2° C, verbunden mit Schneefall, ist die Reaktionsgeschwindigkeit einer geregelten Heizung häufig zu träge. Besonders im Gleisbereich ist nur eine geringe Wärmespeicherung gegeben. Das Schotterbett nimmt durch die große offenliegende Oberfläche, die von der umgebenden Luft umstrichen wird, schnell die Umgebungstemperatur an, ebenso das Gleis als guter Wärmeleiter. Um eine einwandfreie Schnee- und Eisfreihaltung durch die Heizung zu gewährleisten, muss eine, die Steuerung der Anlage überwachende Stelle den Wetterzustand permanent kontrollieren und gegebenenfalls die Beheizung bereits zu einem früheren Zeitpunkt als bei Unterschreitung der normalerweise vorgegebenen Einschalttemperatur manuell einschalten. Findet ein derartiges Ereignis während einer Betriebspause statt, ist ein manuelles Eingreifen meist nicht möglich. Wird nicht rechtzeitig vorgeheizt, kann es in ungünstigen Fällen zu Betriebsstörungen kommen.

Konventionelle elektrische Weichenheizungen beheizen direkt den Fuß der Backenschiene, der Weichenzunge oder beides. Dabei verläuft der Wärmefluss mit starkem Temperaturgefälle von dem hohen Temperaturniveau des Heizelementes, einem elektrisch beheizten Heizstab, im eingeschwungenen Zustand von ca. 40° C, über den Schienenfuß oder den Schienensteg an die Umgebung. Um die Weichen schnee- und eisfrei zu halten, wird Wärme relativ hoher Temperatur auf die Schienen übertragen, da nur so die Temperaturanhebung der Schiene in der erforderlichen kurzen Zeit gewährleistet werden kann. Die elektrisch beheizten Heizstäbe sind lose auf dem Schienenfuß aufgelegt und zwischen den Schwellen jeweils einmal durch federnde Klammern fixiert.

Über alternative Weichenheizungen ist bekannt, diese mit regenerativen Brennstoffen wie Rapsöl zu betreiben (DE 29615 14 U). Damit unterscheidet sich dieses Verfahren nur durch die Wahl des Brennstoffes von öl- bzw. gasbefeuerten Heizungen.

Zudem ist aus der Druckschrift DE 30 37 721 A1 ein Wärmerohr offenbart, bestehend aus einem abgeschlossenen Rohr, flüssig-/ dampfförmigem Arbeitsmedium und die Oberfläche vergrößernden Einlagen für den Wärmetransport. Das Wärmerohr ist in Form eines Bohrkerns so in den Boden eingebracht, dass das umgebende Erdreich als Wärmekapazität wirkt, wobei zur rationelleren Wärmeausnutzung Schalter im Wärmerohr eingebaut sind. Diese Schalter regeln durch Unterbrechung des Kondensatrückflusses oder durch Trennung von Kondensations- und Verdampfungsteils oder durch eine Schaltflüssigkeit den Wärmetransport entsprechend den Anforderungen.

Es ist auch bekannt (EP 1 262 597 A2) für die Beheizung von Weichen Erdwärme in einem im Erdreich verlegten Rohrsystem zu sammeln und in einem Flüssigkeitskreislauf mittels einer durch die Erdwärme auf 5°C bis 10°C erwärmten Flüssigkeit (Glykolgemisch) und einer mit Fremdenergie angetriebenen Umwälzpumpe an das zu beheizende Gleis zu fördern. Ebenso ist bekannt für die Beheizung von Weichen Erdwärme in einem im Erdreich verlegten Rohrsystem zu sammeln und unter Nutzung einer zusätzlich vorzusehenden, motorisch angetriebenen Wärmepumpe die Flüssigkeit auf etwa 30°C oder höher zu erwärmen, die Wärme über einen Wärmeübertrager auf einen zweiten Kreislauf zu übertragen und in diesem mittels einer weiteren Umwälzpumpe an das zu beheizende Gleis zu fördern. Während die umgepumpte Flüssigkeit durch Hohlkörper entlang des Schienensteges oder Schienenfußes strömt, gibt sie die enthaltene Wärme ab. Die Hohlkörper werden unter Verwendung von Wärmeleitpaste an den Schienensteg geschraubt. Um die Strahlungsverluste zu minimieren, werden die Schienenstege außen gegen Wärmeabstrahlung isoliert.

Anlagen mit Glykolgemisch als Arbeitsmedium sind der Wassergefährdungsklasse 1 "schwach wassergefährdend" zugeordnet. Es sind erhebliche Antriebsleistungen für die hier notwendigen Umwälzpumpen des flüssigen Arbeitsmediums notwendig. Die Strömungswiderstände steigen proportional zur Rohrlänge und Strömungsgeschwindigkeit und entgegengesetzt proportional zum Rohrquerschnitt. Um die erforderliche Wärmemenge von etwa 10 kW je durchschnittlicher Weiche zu fördern, muss ohne zusätzliche Wärmepumpe eine Rohrlänge von etwa 200 m im Erdreich in mindestens 10 m Tiefe in einem geschlossenen Kreis verlegt werden. Die maximal möglichen Rohrquerschnitte für die Beheizung sind bei wesentlichen Weichenbauarten konstruktionsbedingt auf wesentlich weniger als 80 mm² begrenzt, dabei ist die Länge der Wärmeabgabestrecke oft 10 m oder mehr. Bei tiefen Umgebungstemperaturen muss das Glykolgemisch, um die notwendige Wärmemenge bei der niedrigen Vorlauftemperatur zu übertragen und nicht einzufrieren, mit sehr hoher Durchflussgeschwindigkeit gepumpt werden oder einen hohen Glykolanteil enthalten. Durch beide Maßnahmen steigt der Strömungswiderstand im Rohr. Daraus resultiert eine weitere Erhöhung der erforderlichen Umwälzpumpenleistung und wegen des geringen Querschnittes im Wärmeabgabebereich ein hoher Innendruck im Rohr, was wiederum, um ein Bersten zu vermeiden, eine erhöhte Rohrwanddicke nach sich zieht, die ihrerseits, wegen der eingeschränkten Außenmaße, zu einem weiteren Anstieg des Strömungswiderstandes führt. Darüber hinaus muss für den Kreislauf einer Flüssigkeit ein getrennter Vor- und Rücklauf vorgesehen werden.

Bei Verwendung einer Wärmepumpe reduziert sich die im Erdreich zu verlegende Rohrlänge deutlich, erhöht sich die Temperatur des Arbeitsmediums und sinkt die erforderliche Strömungsgeschwindigkeit, aber unter Inkaufnahme zusätzlicher Baugruppen Wärmepumpe, Wärmeübertrager, zweiter Kreisläufe und zweiter Umwälzpumpe und der dazugehörigen Schalt- und Steuerelemente.

In folgenden wesentlichen Eigenschaften stimmen alle bisher genannten Heizungen überein und unterscheiden sich darin grundsätzlich von der erfindungsgemäßen Beheizung:
Eine Schaltung (ein-aus) der Leistung ist notwendig und vorgesehen.

Die Schaltung wird durch Sensorik oder zusätzlich manuell ausgelöst.

Die Strahlungsverluste sind durch die hohen Beheizungstemperaturen von etwa 30° C sehr hoch.

Die Heizenergie stammt entweder ganz oder teilweise aus hochwertiger Energie, d.h. fossilen Brennstoffen, elektrischer Energie oder mittels motorisch betriebener Wärmepumpen hochtransformierter Erdwärme.
Bei sehr niedrigen Temperaturen erhöht sich die Heizleistung nicht automatisch und ohne zusätzlich zugeführte Energie aus den eben genannten Energiequellen.

Aus der DE 30 37 721 A1 ist die Nutzung von Erdwärme mittels Wärmerohr auch für die Beheizung von Weichen bekannt. Das dort beschriebene Wärmerohr steckt mit einer Wärmeaufnahmezone im Erdreich und gibt die Wärme an einer Kaltzone ab, womit ein Einfrieren unter anderem von Weichen vermieden werden soll. Dabei sind Schalter im Wärmerohr eingebaut, die durch Unterbrechung des Kondensatrückflusses oder durch Trennung von Kondensations- und Verdampfungsteil oder durch eine Schaltflüssigkeit den Wärmetransport entsprechend den Anforderungen regelt.

Ausgehend von der DE 30 37 721 A1 ist es Aufgabe der Erfindung, eine mittels Wärmerohre mit Erdwärme beheizte Anlage im Bereich der wärmeabgebenden Kaltzone derart zu optimieren, dass bei der geringen Temperatur der Erdwärmequelle von etwa 10°C gleichwohl ein Abschmelzen von Schnee, Eis und dergleichen im Bereich der beweglichen Teile der Weichen sichergestellt werden kann.

Die Erfindung betrifft eine Beheizungsanlage gemäß Patentanspruch 1, mit der Weichen, Kreuzungsweichen oder Kreuzungen direkt von einer oder mehreren Wärmequellen mittels eines oder mehrerer Wärmerohre beheizt wird, die mit einem Arbeitsmedium gefüllt sind, dessen Phasenwechsel flüssig - gasförmig bei der Temperatur der Erdwärmequelle am jeweiligen Ort liegt, vorzugsweise bei etwa 10° C, der häufigsten Temperatur von Erdwärme zwischen 10 und 100 m Tiefe, das keine mittels fremdangetriebener Pumpen umgepumpte Flüssigkeit ist und ohne zusätzliche Komponenten wie Sensorik, Steuerung und bewegte Teile, z.B. Pumpen zirkuliert, wobei die Wärmequelle allein Erdwärme von mindestens 10° C und ohne zusätzliche Temperaturerhöhung ist.

Die erfindungsgemäße Weichenheizung hält ohne jegliche Steuerung oder Regelung die Schienentemperatur konstant deutlich oberhalb des Gefrierpunktes. Dazu wird von jeweils einer Wärmequelle, vornehmlich Erdwärme niederer Temperatur, etwa 10° C, die Wärme durch jeweils ein Wärmerohr mittels eines Arbeitsmediums direkt an die zu beheizende Anlage geführt. Die Regelung des Wärmestromes erfolgt nur durch die physikalischen Gesetze - Ausgleich der Molekülgeschwindigkeiten in einem geschlossenen Raum - und bedarf keiner weiteren Steuerung oder manueller Eingriffe, auch nicht während Temperaturstürzen mit Niederschlägen als Schnee oder Eisregen. Wärmerohre werden hier zur Wärmesammlung, zum Transport und zur Verteilung verwendet. Die vertikale Tiefe der Bohrung beträgt in Gebieten ohne Permafrost normalerweise nicht über 100m, da für Heizkreise mit größerer Leistung die Wärmeverteilung, die in den vorgeschlagenen Anwendungen notwendig in der Waagerechten mit Kapillarrohren erfolgt, zu aufwändig wird. Dabei wird außerhalb von Permafrostgebieten Erdwärme aus dem Bereich zwischen 10 m und 100 m Tiefe genutzt. Diese ist überall, außerhalb der Permafrostgebiete, praktisch konstant und annähernd unbegrenzt mit etwa 10° C oder wärmer vorhanden.

In Permafrostgebieten wird zuerst festgestellt, in welchen Tiefen die Temperatur von 10° C im Erdreich erreicht wird, um dann die Bohrungen bis in diese Tiefe und darüber hinaus um weitere 100 m voranzutreiben.

Die Verwendung von CO₂ als bevorzugtes Arbeitsmedium in allen Wärmekreisläufen, speziell im Wärmesammelrohr, andere Arbeitsmedien sind möglich, und die überwiegende Verwendung von nichtrostendem Stahl für die Wärmerohre bieten die umweltverträglichste Lösung und garantieren im nie auszuschließenden Schadensfall, gegenüber allen anderen heute verwendeten Medien die höchste Sicherheit gegen Umweltschäden. Das Arbeitsmedium CO₂ ist, im Gegensatz zu einem Wasser-Glykol-Gemisch, ein nicht Wasser gefährdender Stoff.

Wärmerohre mit einem Arbeitsmedium, dessen Phasenwechsel flüssig - gasförmig um den Betriebspunkt liegt, arbeiten verschleiß- und wartungsfrei. Dabei werden die physikalischen Eigenschaften der beiden Aggregatszustände genutzt. Die Wärmeverteilung an der zu beheizenden Anlage ist durch die mehrfache Verzweigung des Rohres wesentlich gleichmäßiger erfolgen als bei einer sich allmählich abkühlenden, durch ein langes, dünnes Rohr gepumpten Flüssigkeit. Die verzweigte Wärmeverteilung kann wesentlich effektiver bei dennoch kleinen Rohrquerschnitten arbeiten als eine mit einem einzelnen langen Rohr. Wegen des Verzichts auf bewegte Teile und besonders auf mit Fremdenergie angetriebene Pumpen und auch auf Wärmepumpen, entfällt jeder Wartungsaufwand für diese Aggregate.

Durch die Verwendung eines Arbeitsmediums mit einem Phasenwechsel flüssig - gasförmig bei der Betriebstemperatur des Systems wird nur ein Rohr benötigt (kein getrennter Vor- und Rücklauf), da der gasförmige Vorlauf und der flüssige Rücklauf innerhalb desselben Rohres stattfinden.

Die Wärme verteilenden Rohre werden bei Verwendung der Heizfläche, die fast waagerecht verläuft, mit dieser wärmeleitend verbunden oder sind in sie integriert. Auf den Schwellen können die Gleitstühle die Heizfläche darstellen.

Eine Einheit mit Wärmerohren zur Sammlung, zum Transport und zur Verteilung der Wärme wird im folgenden Heizkreis genannt. Die häufigste Leistung eines Heizkreises liegt bei 5 bis 7 kW.

Das Rohr wird in einer nicht senkrecht verlaufenden Bohrung verlegt. Die vorgezogene Bohrrichtung verläuft mit einem Winkel von etwa 85° bis 45° zur Waagerechten. Es kann in nutzbaren Tiefen von einer durchschnittlichen Energieaufnahme von 50 W/m Bohrtiefe ausgegangen werden. Aus diesen Vorgaben ergibt sich die Heizleistung eines Heizkreises, je nach Neigung der Bohrung, zu 5 bis 7 kW.

Zur Schadensüberwachung eines Heizkreises kann ein Drucksensor, der den Druck in dem System misst oder ein Temperaturfühler, der die Temperatur an einem Wärmeverteilrohr misst, vorgesehen werden.

Weiteres Ziel dieser Erfindung ist es, Weichen derart zu beheizen, das unter Verwendung von geringwertiger Energie, Wärme niedrigen Temperaturniveaus, eine Beheizung mit nur geringen Strahlungsverlusten und überwiegend durch Wärmeübertragung, insgesamt energetisch günstiger als bisher bekannt, realisiert wird. Durch das geringere Temperaturgefälle werden die Strahlungsverluste, beispielsweise bei einer Verringerung der Heiztemperatur von 30° C auf 10° C, um etwa 75 % reduziert.

Ein weiterer Vorteil der Erfindung ist der Betrieb von Beheizungen von Weichen ohne Nutzung von Energie aus fossilen Brennstoffen bzw. elektrischem Strom oder anderen Rohstoffen zu ermöglichen. Das bedeutet die weitest gehende oder sogar vollständige Substitution von nicht regenerativer Fremdenergie aus fossilen Brennstoffen bzw. elektrischem Strom oder der aus nachwachsenden Rohstoffen für den Betrieb von Heizungen für Verkehrsanlagen zu erreichen und damit auch eine nicht unbeträchtliche Verringerung des CO₂ Ausstoßes.

Ziel ist weiter, dass hier der Wärmefluss fakultativ auch unterhalb und nicht nur seitlich des Bereiches, auf den der Niederschlag fällt und der schnee- und eisfrei gehalten werden soll, geführt wird. Dies entspricht dem gesamten Raum zwischen der Backenschiene und der Weichenzunge, über die ganze Breite und Länge des von der Weichenzunge während der Stellvorgänge überstrichenen Bereiches. Dazu kann ein weiteres Wärme verteilendes Wärmerohr im halben Abstand des maximalen Abstandes der Weichenzunge von der Backenschiene geführt werden.

Dazu sind beheizte Gleitstühle bekannt (DE 195 02 125 C2), deren beheizte Fläche sich aber nur auf den Gleitstuhl beschränkt.

Sollen die Wärme verteilenden Wärmerohre an Stelle der konventionellen elektrischen Heizstäbe verlegt werden, meist in der Waagerechten, ist dies in den meisten Fällen möglich. Es werden dann Rohre verwendet, deren Innenwand mit einer Kapillarstruktur (einem Docht), bedeckt ist, sogenannte Kapillarrohre. Die prinzipielle Funktion von Wärmerohren, auch dieser speziellen Ausführung, ist in der Literatur bekannt.

Der Querschnitt der Wärmeverteilrohre muss annähernd die gleiche Größe haben wie die Wärmesammelrohre, um den Dampfstrom und damit den Wärmetransport nicht zu reduzieren. Eine Verzweigung auf mehrere Wärmerohre auf der Wärmeabgabeseite ist sinnvoll, um so den Anteil der notwendigen waagerechten Rohrführung mittels Kapillarrohren so kurz wie möglich zu halten. Die verfahrensmäßig maximale Länge von Kapillarrohren ist begrenzt und abhängig vom Rohrdurchmesser. Dieser ist, wie beschrieben, in einigen Weichenkonstruktionen sehr klein.

Zur besseren Wärmeabgabe von den Wärmeverteilrohren können für die Wärmeverteilrohre besonders gut leitende Materialien gewählt werden. Dann kann es notwendig sein, dass, um Korrosionsschäden durch elektrochemische Elemente zu vermeiden und die Wartungsfreiheit zu gewährleisten, an der Anlage eine Opferelektrode installiert werden muss oder die beiden Metalle elektrisch nicht leitend miteinander zu verbinden.

Es ist auch möglich am Wärmesammelrohr dort, wo es aus dem Erdreich heraustritt, einen Wärmeübertrager zu installieren. Der Wärmeübertrager ist derart ausgebildet, dass die Wärmeaufnahmeseiten der Wärmeverteilrohre einzeln hineingesteckt werden. Damit wird eine einfache Demontierbarkeit und einfacher Ersatz einzelner Wärmerohre bei Beschädigung erreicht und dass die einzelnen Wärmerohre gasdicht voneinander getrennt sind und somit unterschiedliche Arbeitsmedien und Rohrmaterialien verwendet werden können.

Handelt es sich um Weichenbauarten bei denen die maximalen Abmessungen der Wärmerohre sehr begrenzt sind, z. B. im Bereich der Gleitstühle und ist eine höhere Heizleistung aus klimatischen Gründen notwendig, können zusätzliche Wärmerohre auch um die zu erwärmenden Stellen herum verlegt werden ohne dass die Rohrführung die Heizwirkung beeinträchtigt (Prinzip der Kapillarrohre).

Die Wärmerohre haben im Normalfall eine Länge von 100 m bis 140 m wobei die obersten 10 m und der Transportweg bis zur zu beheizenden Anlage thermisch isoliert sind, um in extrem kalten Wetterlagen Energieverluste an das in dieser Tiefe kältere Erdreich und die Umgebungsluft zu vermeiden. An Heizanlagen in Permafrostgebieten werden die Wärme transportierenden Wärmerohrabschnitte in dem gesamten Bereich mit Temperaturen unter 10° C thermisch isoliert.

Bei dem üblichen Wärmebedarf für Weichenheizungen und die anderen zu beheizenden Bahnanlagen, müssen mehrere Heizkreise vorgesehen werden.

Weiterhin kann eine Verfahren zur Beheizung von Bahnsteigkanten, Bahnübergängen und Straßenkreuzungen zur Verbesserung der Sicherheit an diesen vom Zugverkehr gefährdeten Orten eingesetzt werden. Das sind insbesondere die Bereiche innerhalb eines Meters von der Bahnsteigkante in Richtung Bahnsteigmitte, schienengleiche Übergänge für Reisende im Bereich kleinerer Bahnhöfe und Haltepunkte und die beschrankten und unbeschrankten Bahnübergänge.

Die Flächen dieser Bereiche sind relativ klein und lassen sich mit der vorgeschlagenen Technologie bei vertretbarem technischen Aufwand schnee- und eisfrei halten. Bei Anwendung der vorgeschlagenen Beheizung ist eine Gefährdung unter üblichen Winterbedingungen praktisch ausgeschlossen, ebenso Bedienfehler. So werden die Sicherheit an den genannten Anlagen im Winter bei Schneefall oder Eisregen wesentlich erhöht und die Unterhaltungsaufwendungen verringert.

Der derzeitige Stand der Technik der Verminderung der Rutschgefahr besteht in der mechanischen, z. T. auch manuellen Schneeräumung und dem Streuen abstumpfender Mittel wie Splitt oder Salz.

Für die Schnee- und Eisfreihaltung muss in den genannten Bereichen außerdem besonders geschultes Personal eingesetzt werden, das mit den Gefahren des Eisenbahnverkehrs vertraut ist.

Beheizungen von Verkehrsanlagen mit Erdwärme sind bekannt, unterscheiden sich aber von der vorgeschlagenen Technologie in wesentlichen Punkten.

Erdwärmenutzung für den Einsatzzweck der Beheizung von Straßen wird in der Offenlegungsschrift DE 3532542 A1 und der Patentschrift DE 3532452 C2 aus dem Jahr 1985 vorgestellt. Um eine große Fläche wie eine Straße sicher zu beheizen sind entweder sehr große Wärmeaufnahmeräume im Erdreich durch viele lange Bohrungen zu erschließen und die Wärme muss in Vorratsbehältern gesammelt und gelagert und bei Bedarf über eine durch Klimasensoren geführte Steuerung an die zu beheizende Straße abgegeben werden.

Bei dieser Beheizung mit Erdwärme als Wärmequelle ist eine schaltbar ausgeführte Anlage vorgesehen, die erst bei Über- bzw. Unterschreiten von klimaspezifischen Grenzwerten, wie Luftfeuchtigkeit, Lufttemperatur, Windgeschwindigkeit, Oberflächentemperatur und Oberflächenfeuchtigkeit die Wärme abgibt und so den Wärmevorrat des Erdreiches schont. Eine Steuerung ist bei der Beheizung von Straßen notwendig, weil die Beheizung der großen Oberfläche eine wesentlich größere Energiemenge erfordert als eine schmale langgestreckte Weichenheizung, ein schmaler Streifen einer Bahnsteigoberfläche oder ein niveaugleicher Bahnübergang. Diese Energiemenge kann durch Erdwärme nur mit einem zusätzlichen Energiespeicher dargestellt werden. Die Beheizung von Schienenwegen, speziell den Weichen, unterscheidet sich davon weiter wesentlich, dass die beengten Raumverhältnisse im Gleisbereich besondere Wärmeverteilrohrformen erfordern und die zu beheizenden Teile auch beweglich sind, also nicht durch in Straßenpflaster eingelassene Rohre schnee- und eisfrei gehalten werden können.

Wegen der großen offenliegenden Oberfläche des Schotters, die von der umgebenden Luft umstrichen wird, ist fast keine Wärmespeicherung vorhanden, auf die man sich bei dem Eisfreihaltungskonzept stützen kann, vielmehr nimmt das Schotterbett schnell die Umgebungstemperatur an, ebenso das Gleis als guter Wärmeleiter. Somit musste ein Verfahren gefunden werden, das die Temperatur der Weiche an den freizuhaltenden Punkten selbsttätig konstant auf etwa 10° C hält und dies ohne Steuerung, ohne Zuführung von Fremdenergie und irgendwelche Wartung erfordernden Aggregate und den Entfall sämtlicher steuernder Sensorik.

Die Beheizung von Verkehrsschildern - Einrichtung zur Verwendung von Erdwärme - DE 40 36 729 A1 erfordert nur sehr kleine Wärmemengen verglichen mit einer Weichenheizung oder anderen Bahnanlagenheizungen. Der wesentliche Unterschied liegt in den Leistungsbereichen, die bei Weichenheizungen und den anderen genannten Anwendungen um die Faktoren 20 bis 100 höher liegen. Von ebensolcher Bedeutung ist die Tatsache, dass es sich um eine Verhinderung einer Sichtbehinderung handelt und keine beweglichen Teile, wie bei der Weiche, beheizt werden. Ein weiterer grundlegender Unterschied liegt auch darin, dass in einem Verkehrsschild keine längeren waagerechten Strecken bei der Wärmeverteilung überwunden werden müssen. Überdies fällt der Niederschlag auf die Fläche der Heizung der hier genannten Anlagen (bei der Weiche, Bahnsteig, Überweg, Straßenkreuzung) von oben, muss demnach gänzlich weggeschmolzen werden, wogegen bei Verkehrszeichen die Schwerkraft die wesentliche Aufgabe übernimmt, den Niederschlag, Schnee, Eisregen oder Reif in nur angetautem Zustand abgleiten zu lassen.

Ausführungsbeispiele werden im Folgenden mit Bezug auf die beigefügten Zeichnungen beschrieben.
- Figur 1: zeigt eine schematische Darstellung des Aufbaues eines Wärmerohres, der zu beheizenden Verkehrsanlage und des Wärmestromes mit Wärmeführung direkt an eine zu beheizende Verkehrsanlage.
- Figur 2: Aufteilung der Wärmeströme an einer Verteilung
- Figur 3a: zeigt eine schematische Darstellung eines Verfahrens mit drei Heizkreisen und der Position der Wärmeveteilrohre bei einer Verkehrsanlage am Beispiel einer Weiche.
- Figur 3b: zeigt die schematische Darstellung der Wärmeflüsse von zwei Heizkreisen in der Draufsicht in einer Weiche
- Figur 3c: zeigt die schematische Darstellung der Wärmeflüsse bei zwischengeschaltetem Wärmeübertrager in der Draufsicht im Bereich der Weichenzunge
- Figur 4a: zeigt den prinzipiellen Aufbau der erfindungsgemäßen Weichenbeheizungsanlage im Querschnitt, mögliche Führungen des Wärmestromes und der Wärmerohre auf der Schwelle am Anfang der Weichenzunge
- Figur 4b: zeigt den prinzipiellen Aufbau der erfindungsgemäßen Weichenbeheizungsanlage im Querschnitt, mögliche Führungen des Wärmestromes und der Wärmerohre im Bereich zwischen den Schwellen, am Anfang der Weichenzunge
- Figur 4c: zeigt den prinzipiellen Aufbau der erfindungsgemäßen Weichenbeheizungsanlage im Querschnitt, mögliche Führungen des Wärmestromes und der Wärmerohre auf der Schwelle im Verlauf der Weichenzunge
- Figur 4d: zeigt den prinzipiellen Aufbau der erfindungsgemäßen Weichenbeheizungsanlage im im Querschnitt, mögliche Führungen des Wärmestromes und der Wärmerohre im Bereich zwischen den Schwellen im Verlauf der Weichenzunge
- Figur 4e: zeigt den prinzipiellen Aufbau der erfindungsgemäßen Weichenbeheizungsanlage im Querschnitt, weitere mögliche Führungen des Wärmestromes und der Wärmerohre auf der Schwelle am Anfang der Weichenzunge
- Figur 4f: zeigt den prinzipiellen Aufbau der erfindungsgemäßen Weichenbeheizungsanlage im Querschnitt, weitere mögliche Führungen des Wärmestromes und der Wärmerohre im Bereich zwischen den Schwellen, am Anfang der Weichenzunge
- Figur 4g: zeigt den prinzipiellen Aufbau der erfindungsgemäßen Weichenbeheizungsanlage im Querschnitt, weitere mögliche Führungen des Wärmestromes und der Wärmerohre auf der Schwelle im Verlauf der Weichenzunge
- Figur 4h: zeigt den prinzipiellen Aufbau der erfindungsgemäßen Weichenbeheizungsanlage im Querschnitt, weitere mögliche Führungen des Wärmestromes und der Wärmerohre im Bereich zwischen den Schwellen im Verlauf der Weichenzunge
- Figur 5a: zeigt den prinzipiellen Aufbau einer Anlagenheizung für Bahnsteigkanten in der Ansicht vom Gleis
- Figur 5b: zeigt den prinzipiellen Aufbau einer Anlagenheizung für Bahnsteigkanten (möglicher Rohrverlauf im aufgeschnittenen Bahnsteig, Draufsicht)

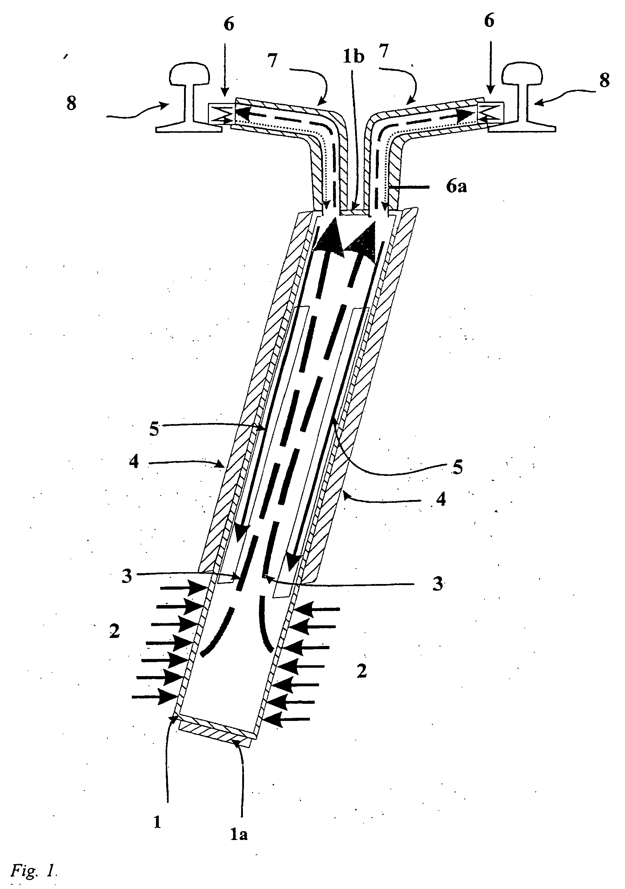

Ein Wärmerohr besteht aus einem vakuumdicht verschlossenen Rohr, das mit einer kondensierenden und verdampfenden Substanz, dem Wärmetransportmittel (im Folgenden als Arbeitsmedium bezeichnet) gefüllt ist. Das Prinzip ist in Verbindung mit einer Weichenheizung in Fig. 1 dargestellt.

Im einfachen Fall, wenn das Rohr (1) leicht zur Senkrechten geneigt steht, ist die Warmzone (2), in der das Arbeitsmedium verdampft - Dampfströmung (3) -, im tieferliegenden Bereich, so dass die dampfförmig Arbeitsmedium durch die Transportzone (4) in die Kaltzone (6) aufsteigt. Dort gibt sie die enthaltene Wärmeenergie ab, kondensiert und fließt an der Rohrwand als Flüssigkeitsströmung (5) wieder hinab.

Das Rohr (1), gefüllt mit der arbeitenden Flüssigkeit, besteht aus einer warmen Zone mit der Wärmaufnahme (2), im vorliegenden Fall im Erdreich der Abschnitt unterhalb 10 m von der Terrainoberfläche, senkrecht dazu gemessen, einer Isolations- oder Transportzone (4), die von direkt oberhalb der warmen Zone über die Terrainoberfläche hinaus bis zur Kaltzone reicht. Dazu gehören auch die temperaturisolierten Abschnitte der Verteilungsrohre (7). Die Kaltzone ist der Abschnitt, in dem die Wärmeabgabe erfolgt. Diese erfolgt in Figur 1 direkt über die nicht temperaturisolierten Abschnitte der Verteilungsrohre (6), die neben der zu beheizenden Verkehrsanlage (8) liegen und in der Zeichnung als Wärmeübertrager (6) dargestellt sind. Die Verteilungsrohre (7) werden gasdicht und demontierbar direkt oberhalb des Erdreiches (1b) befestigt. Dort ist auch ein Temperatursensor (6a) zur Funktionsüberwachung angebracht. Werden am Rohr verschiedene Metalle für den Aufnahmebereich und den Verteilbereich verwendet, so ist eine Opferelektrode (1a) aus einem weniger edlen Metall vorgesehen.

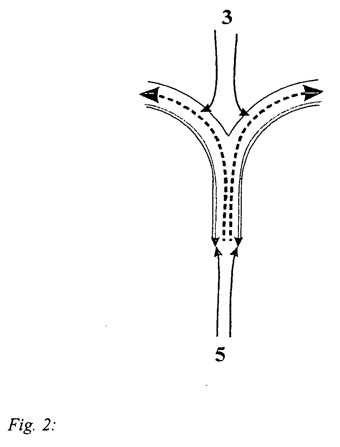

Wenn Verzweigungen des Wärmeflusses notwendig sind, ist es vorteilhaft, wenn diese auf Verteilungsrohre symmetrisch zur Senkrechten, wie in Fig. 2 dargestellt, ausgeführt werden. Die Verteilung der Wärmeströme - (3) warmes aufsteigendes Gas, (5) abfließendes kaltes Kondensat - eines Heizkreises wird nach den jeweils erforderlichen Wärmemengen durch Wahl geeigneter Durchmesser der Verteilerrohre angepasst. Die Summe der Querschnitte der Verteilrohre ist mindestens annähernd gleich dem Querschnitt des Sammelrohres.

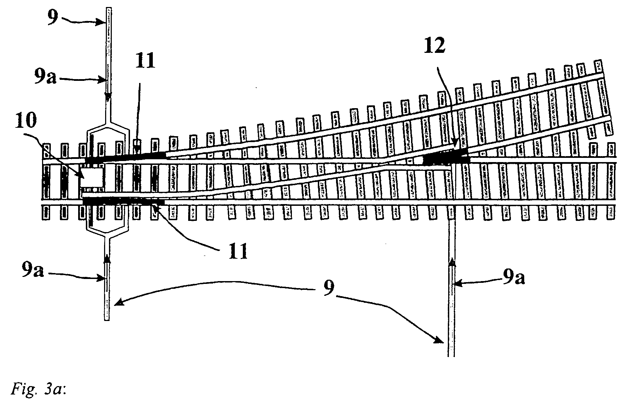

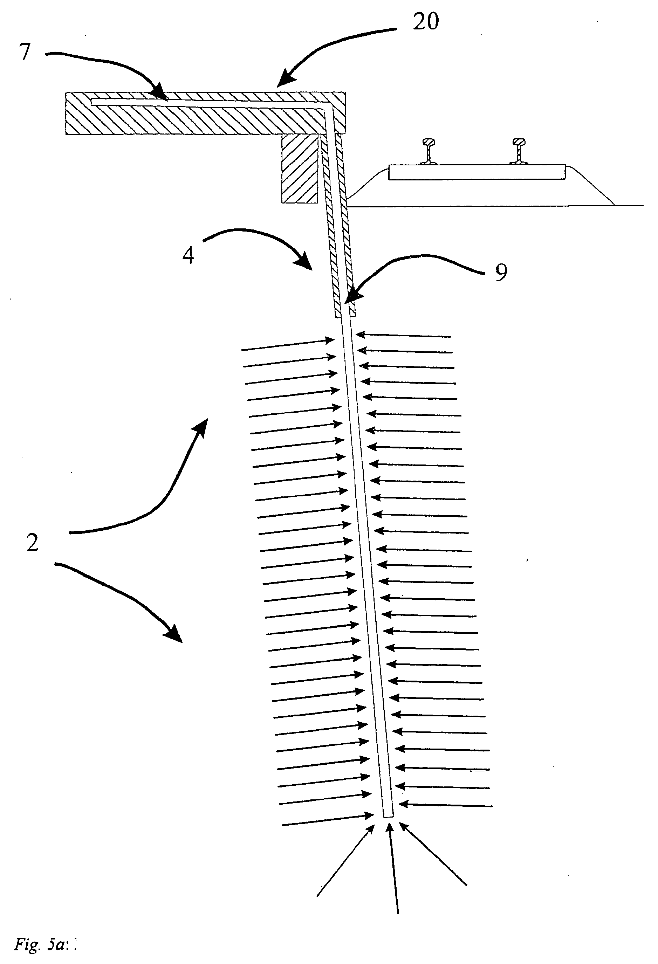

Neben der frostfrei zu haltenden Weiche Fig. 3a oder einer anderen Bahnanlage Fig. 5a, wird je Heizkreis ein Wärmerohr (9) unter einem in weitem Bereich wählbaren Winkel in das Erdreich eingelassen. Bei einer für die Wärmeaufnahme von etwa 50 W je Meter nutzbarer Rohrlänge von 90 bis 130 m - abhängig vom Winkel der Bohrung zur Senkrechten - ergibt sich die Heizleistung je Heizkreis zu 5 bis 7 kW. Für die Heizleistung einer durchschnittlichen Weiche von 10 kW und der Verschlussfachheizung von 1,5 kW werden somit zwei Heizkreise benötigt. Für eine Weiche mit sehr großem Abzweigradius und beweglichem Herzstück - Hochgeschwindigkeitsweiche - ist eine Heizleistung von 50 kW erforderlich, entsprechend 9 bis 10 Heizkreisen.

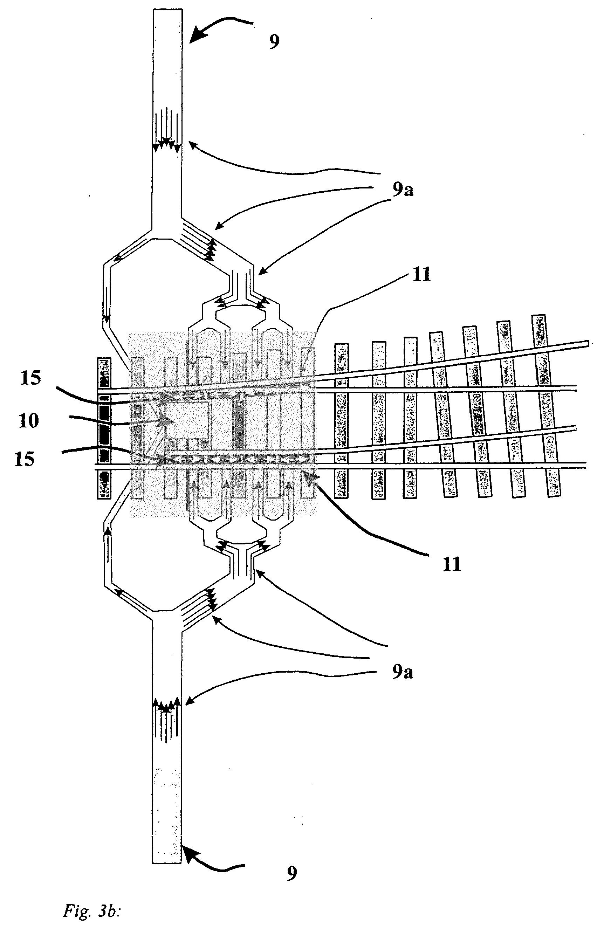

Die Wärmeübertragung an die Schiene sollte nicht nur symmetrisch sein, besser aus mindestens zwei Verteilungen bestehen, damit 5m Kapillarrohrlänge nicht überschritten werden. Günstiger sind wesentlich kürzere Kapillarrohre. Es sollten auch gleichgroße Rohrdurchmesser, bzw. mit nach der jeweils erforderlichen Wärme in dem entsprechenden Abschnitt angepasste Durchmesser gewählt werden. Der Anteil der waagerechten Rohrführung - Kapillarrohre - ist so kurz wie möglich zu halten. Es ergeben sich somit aus der Relation derzeit geforderte Wärmeleistung elektrisch 330 bis 400 W je Meter und 1 kW Heizleitung für den Verschlusskasten zu 5 kW Heizleistung je Heizkreis bei einer mittigen Einspeisung, symmetrischen Aufteilung und vier Einspeisstellen je Seite etwa 8 x 1,25 m Kapillarrohr (Fig.3b).

Der prinzipielle Aufbau der Wärmeführung ist in Fig. 3a bis Fig. 3c dargestellt. Fig. 3a zeigt den Wärmefluss (9a) in den Erdwärmerohren (9), dem Sammelbereich. Er wird nach dem Austritt aus dem Erdreich in nach dem möglichen Querschnitt optimierten Längen aufgeteilt und verläuft dann in der Waagerechten oder fast Waagerechten in Kapillarrohre, beispielsweise unter dem Stellweg der Backenschienen (11), dem Verteilungsbereich.

In Fig. 3b wird verdeutlicht, wie der Wärmestrom (9a) direkt, von dem Sammelbereich (9) kommend, auf die einzelnen Segmente und den Verschlusskasten (10) aufgeteilt werden kann und in der Waagerechten durch kurze Kapillarrohre (15) an die zu beheizenden Zonen geführt wird (11). Die Abhängigkeit der Intensität des Wärmestromes vom Rohrdurchmesser wird durch die Anzahl der Pfeile symbolisiert.

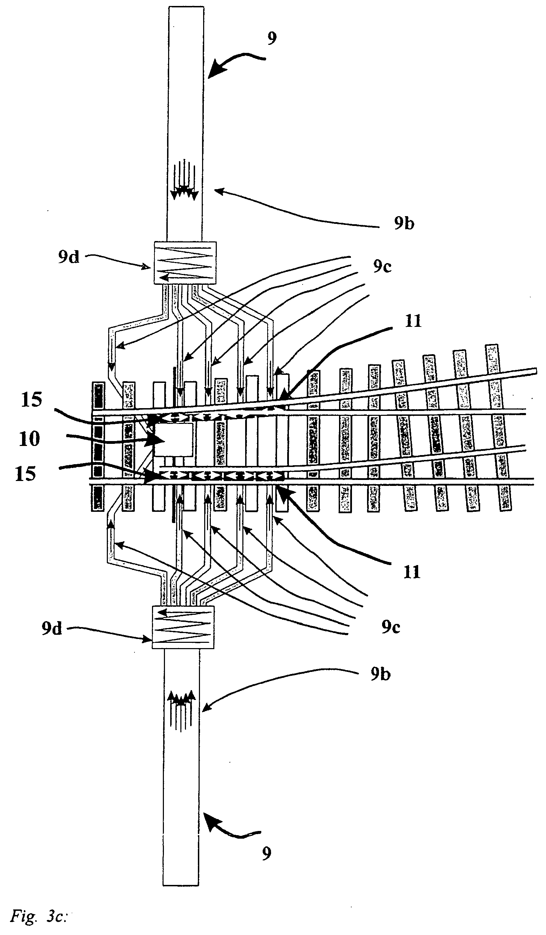

In Fig. 3c wird verdeutlicht, wie der Wärmestrom (9b), der Primärstrom, von dem Sammelbereich (2) kommend, durch den Wärmeübertrager (9d) geführt und in Sekundärströmen (9c) auf die einzelnen Segmente und den Verschlusskasten (10) aufgeteilt werden kann und in der Waagerechten durch kurze Kapillarrohre (15) an die zu beheizenden Zonen geführt wird (11). Die Abhängigkeit der Intensität des Wärmestromes vom Rohrdurchmesser wird durch die Anzahl der Pfeile symbolisiert.

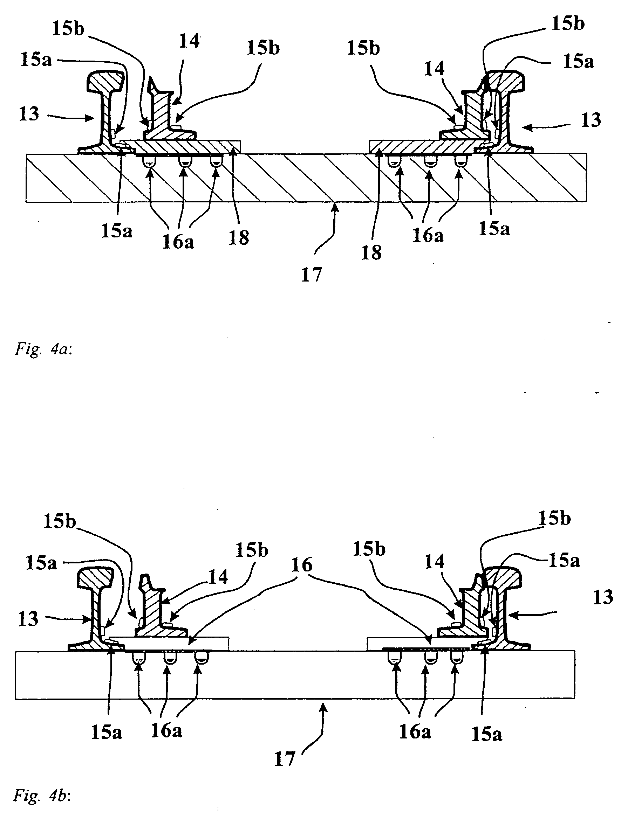

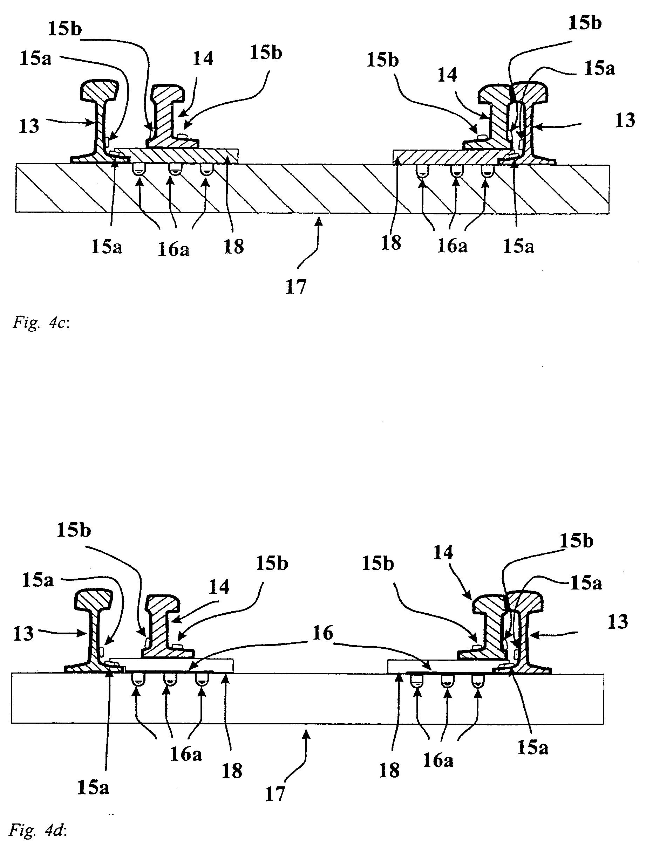

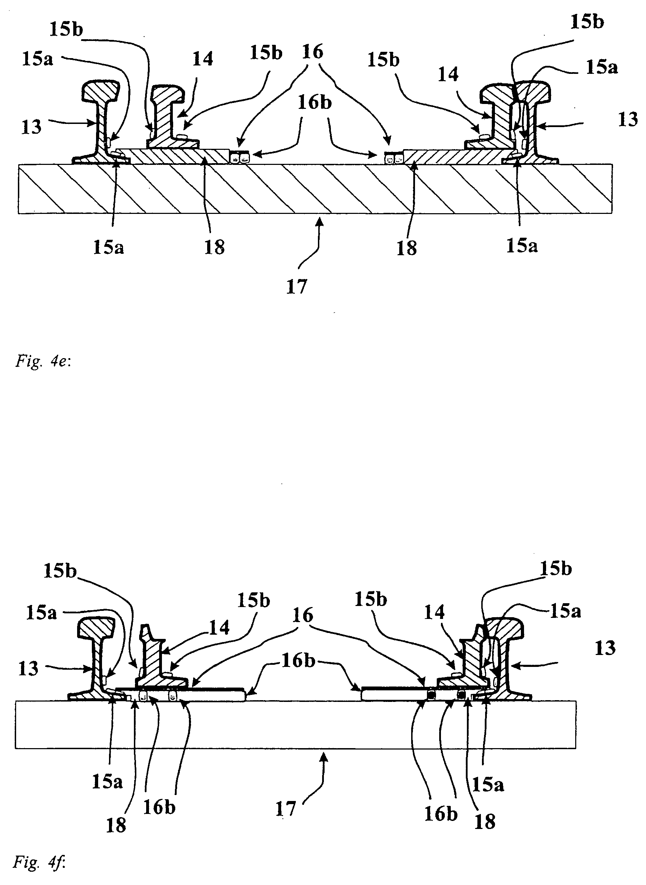

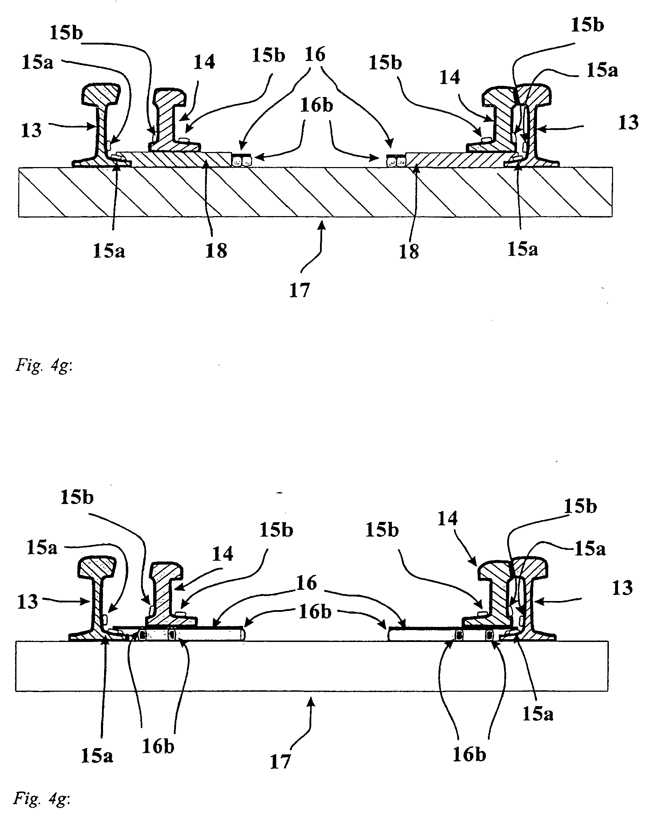

Für die in Fig. 3b und Fig. 3c dargestellten Wärmeströme sind in Fig. 4a bis 4f in Querschnitten mögliche Rohrführungen gezeigt. Der Wärmestrom verläuft durch die Kapillarrohre (15a, 15b, 16a, 16b) in der Waagerechten oder nahezu Waagerechten entlang der Gasströmung. Das Rohr wird entweder (15a) entlang der Backenschiene (13) oder (15b) entlang der Weichenzunge (14), wie die derzeitigen elektrischen Heizstäbe geführt. Dabei wird die Wärme auf die Schienenfuße übertragen Weitere Alternativen zeigen die Kapillarrohre (16a). Aus einem oder mehreren, hier drei parallel verlegten Rohren wird der Wärmestrom auf die darüber liegende Heizfläche (16) übertragen. Deren Oberfläche ist derart ausgeführt, dass das Schmelzwasser seitlich abläuft und abgeführt wird. Auf den Schwellen (17) verläuft der Wärmestrom aus den Kapillarrohren (16a) von unten in den Gleitstuhl. Dabei sind die Rohre in die Schwelle eingelassen. Werden wie in Fig. 4e und 4f dargestellt, die Rohre (16b) auf der Schwelle um den Gleitstuhl (18) herum geführt, ist auf den Rohren eine Heizfläche (16) befestigt, die zwischen den Schwellen breiter ist als auf dem Gleitstuhl und deren Oberfläche derart ausgeführt ist, dass das Schmelzwasser seitlich abläuft und abgeführt wird. Eine Kombination aus zwei oder mehreren Rohrführungen ist möglich. Dargestellt ist die Kombination möglicher Rohrführungen.

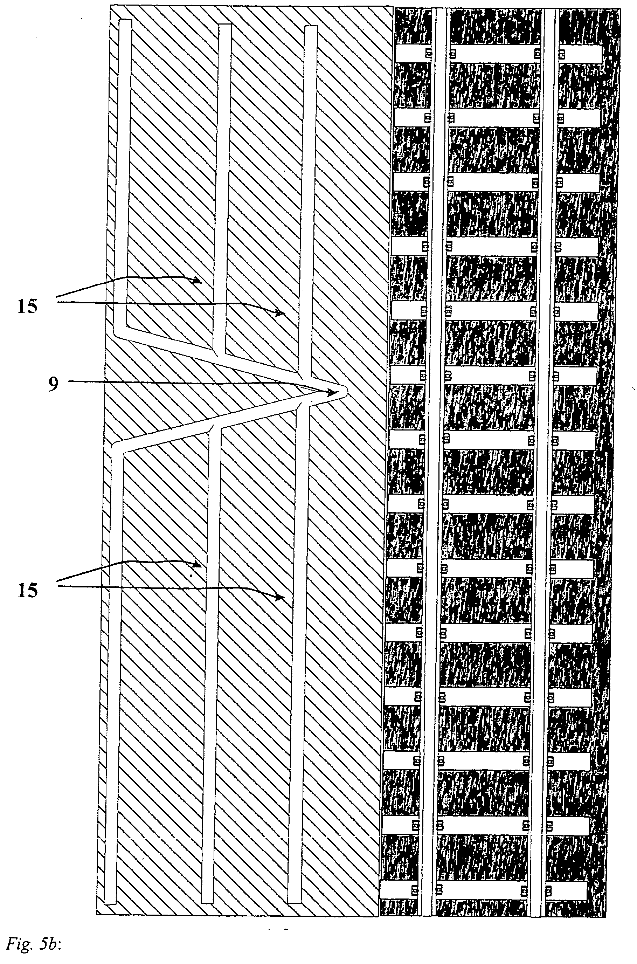

Bei den anderen Bahnanlagen, Beispiel Bahnsteigkantenheizung Fig. 5a und 5b, werden die Verteilrohre (7) in der zu beheizenden Fläche (19) mit leichtem Gefälle verlegt, deshalb müssen nicht unbedingt Kapillarrohre verwendet werden. Die Neigung des Wärmerohres (9) von 5° gegen die Senkrechte ist hier quer zum Gleiskörper dargestellt, kann aber in jeder, für die jeweilige Bohrung günstigste Neigung ausgeführt werden. Die Isolierung (4) des Wärmerohres ist bis zur Einführung in den Bahnsteigkörper notwendig.

## Patentansprüche

1. Weichenbeheizungsanlage zur Schnee- und Eisfreihaltung mit Erdwäzme, umfassend ein oder mehrere Wärmerohre (1, 9) mit jeweils einer im Erdboden eingebrachten Wärmeaufnahmezone (2), einer Transportzone (4) sowie einer die Wärme abgebenden Kaltzone (6), die mit einem Arbeitsmedium gefüllt sind, dessen Phasenwechsel flüssig - gasförmig bei der Temperatur der Erdwärmequelle am jeweiligen Ort liegt, vorzugsweise etwa 10° C, wobei die Weichenbeheizungsanlage keine zusätzlichen Komponenten wie Sensorik, fremdangetriebene Pumpen oder Wärmepumpen oder andere bewegte Teile enthält, und wobei das Arbeitsmedium ohne fremdangetriebene Pumpen zirkulieren kann, **dadurch gekennzeichnet, dass** die Kaltzone (6) aus einer sich mehrfach verzweigenden Wärmeverteilung besteht, wobei die wärmeverteilenden Rohre (15a, 15b, 16a, 16b) mit einer Heizfläche wärmeleitend verbunden oder in der Heizfläche integriert sind und die Heizfläche fast waagerecht verläuft.

2. Beheizungsanlage nach Anspruch 1, **dadurch gekennzeichnet, dass** die Wärmerohre im Bereich der Transportzone, die von direkt oberhalb der Wärmeaufnahmezone über die Terrainoberfläche hinaus bis zur Kaltzone reicht, thermisch isoliert sind.

3. Beheizungsanlage gemäß Anspruch 1 oder 2, **dadurch gekennzeichnet, dass** sie ein Wärmesammelrohr und Wärmeverteilrohre aufweist, wobei die Summe der Querschnitte der Wärmeverteilrohre insgesamt etwa gleich groß ist, wie der Querschnitt des Wärmesammelrohres.

4. Beheizungsanlage nach einem der Ansprüche 1 bis 3, **dadurch gekennzeichnet, dass** sie einen Primärkreislauf enthält, in dem die Wärme in einem Wärmerohr gesammelt wird, einen Wärmeübertrager in dem die Wärme auf ein oder mehrere Wärmerohre, die Sekundärkreisläufe übertragen wird, wobei die Sekundärkreisläufe die Wärme an die Weichen, Kreuzungen und Kreuzungsweichen übertragen, mit der Möglichkeit der Verwendung unterschiedlicher Arbeitsmedien in den einzelnen Wärmerohren.

5. Beheizungsanlage nach einem der Ansprüche 1 bis 4, **dadurch gekennzeichnet, dass** das Wärmerohr im Bereich der Wärmeaufnahme und im Bereich der Wärmeabgabe aus unterschiedlichen Metallen besteht und eine Opferanode zur Vermeidung unkontrollierter Korrosion installiert ist oder zwischen den unterschiedlichen Metallen ein elektrisch nichtleitendes Verbindungsstück eingesetzt ist.

6. Beheizungsanlage nach einem der Ansprüche 1 bis 5, **dadurch gekennzeichnet, dass** eine Funktionsüberwachung der Anlage durch Temperaturfühler auf einem Wärmeverteilrohr oder durch Drucksensoren im Rohrsystem vorgesehen ist.

7. Beheizungsanlage nach einem der Ansprüche 1 bis 6, **dadurch gekennzeichnet, dass** die Wärmeverteilrohre demontierbar und von dem unteren, die Wärme sammelnden Wärmerohr trennbar ausgeführt sind.

8. Beheizungsanlage nach einem der Ansprüche 1 bis 7, **dadurch gekennzeichnet, dass** für die Wärmeverteilung in der Kaltzone in der Waagerechten Wärmeverteilrohre als Kapillarrohre angeordnet sind.

9. Beheizungsanlage nach einem der Ansprüche 8, **dadurch gekennzeichnet, dass** auf den Kapillarrohren die Heizfläche (16) befestigt ist, wobei die Heizfläche zwischen den Schwellen breiter ist als auf einem zur Weiche gehörenden Gleitstuhl.

10. Beheizungsanlage nach einem der Ansprüche 1 bis 9, **dadurch gekennzeichnet, dass** die Wärme führenden Wärmeverteilrohre in den jeweils zwischen den Backenschienen und der Weichenzunge liegenden Bereich verlegt sind.

11. Beheizungsanlage nach einem der Ansprüche 1 bis 9, **dadurch gekennzeichnet, dass** die Wärmeverteilrohre bei Schwellen in die Schwellen oder bei fester Fahrbahn in die feste Fahrbahn integriert sind.

12. Beheizungsanlage nach einem der Ansprüche 1 bis 11, **dadurch gekennzeichnet, dass** mindestens ein Wärmerohr mit CO₂ als Arbeitsmedium gefüllt ist.

## Claims

1. Points heating system for keeping points free from snow and ice using geothermal heat, comprising one or more heat pipes (1, 9), each having a heat absorption zone (2) placed in the ground, a transport zone (4) and a heat-emitting cold zone (6), which pipes are filled with a working medium, of which the phase change liquid - gas is at the temperature of the geothermal heat source at the respective location, preferably at about 10°C, the points heating system containing no additional components such as sensors, externally driven pumps or heat pumps or other moving parts, and the working medium being able to circulate without externally driven pumps, **characterised in that** the cold zone (6) consists of a multiply branching heat distribution, the heat-distributing pipes (15a, 15b, 16a, 16b) being heat-conductingly connected to a heating surface or integrated in the heating surface and the heating surface extending almost horizontally.

2. Heating system according to claim 1, **characterised in that** the heat pipes are thermally insulated in the region of the transport zone, which extends from directly above the heat absorption zone beyond the terrain surface to the cold zone.

3. Heating system according to claim 1 or 2, **characterised in that** it has a heat-collecting pipe and heat-distributing pipes, the sum of the cross-sections of the heat-distributing pipes altogether being approximately the same size as the cross-section of the heat-collecting pipe.

4. Heating system according to one of claims 1 to 3, **characterised in that** it contains a primary circuit in which the heat is collected in a heat pipe, a heat exchanger in which the heat is transferred to one or more heat pipes, the secondary circuits, the secondary circuits transmitting the heat to the points, crossings and slips, with the possibility of using different working media in the individual heat pipes.

5. Heating system according to one of claims 1 to 4, **characterised in that** the heat pipe in the region of the heat absorption and in the region of the heat emission consists of different metals and a sacrificial anode for avoiding uncontrolled corrosion is installed or an electrically non-conductive connection piece is inserted between the different metals.

6. Heating system according to one of claims 1 to 5, **characterised in that** a function monitoring of the system is provided by temperature sensors on a heat-distributing pipe or by pressure sensors in the pipe system.

7. Heating system according to one of claims 1 to 6, **characterised in that** the heat-distributing pipes are designed to be removable and separable from the lower, heat-collecting heat pipe.

8. Heating system according to one of claims 1 to 7, **characterised in that** for the heat distribution in the cold zone, heat-distributing pipes are arranged horizontally as capillary tubes.

9. Heating system according to one of claims 8, **characterised in that** the heating surface (16) is fastened to the capillary tubes, the heating surface being wider between the sleepers than on a slide chair belonging to the points.

10. Heating system according to one of claims 1 to 9, **characterised in that** the heat-carrying, heat-distributing pipes are laid in the region lying respectively between the stock rails and the switch blade.

11. Heating system according to one of claims 1 to 9, **characterised in that** the heat-distributing pipes, in the case of sleepers, are integrated into the sleepers or, in the case of a ballastless track, are integrated into the ballastless track.

12. Heating system according to one of claims 1 to 11, **characterised in that** at least one heat pipe is filled with CO₂ as working medium.

## Revendications

1. Installation de chauffage d'aiguillages permettant de les maintenir déneigés et dégivrés en utilisant l'énergie géothermique, comprenant un ou plusieurs caloducs (1, 9) présentant chacun une zone de réception de chaleur (2) introduite dans le sol, une zone de transport (4) et une zone froide (6) délivrant la chaleur, lesdits caloducs étant remplis d'un fluide de travail dont le changement de phase liquide-gazeux se situe à la température de la source de chaleur géothermique à l'endroit concerné, de préférence à sensiblement 10 °C, l'installation de chauffage d'aiguillages ne contenant pas de composants supplémentaires tels qu'un système de capteurs, des pompes à commande externe ou des pompes à chaleur ou autres pièces mobiles, et le fluide de travail pouvant circuler sans pompes à commande externe, **caractérisée en ce que** la zone froide (6) est constituée d'une répartition de chaleur à multiples ramifications, les tuyaux répartiteurs de chaleur (15a, 15b, 16a, 16b) étant reliés de façon thermoconductrice à une surface chauffante ou étant intégrés dans la surface chauffante et la surface chauffante s'étendant presque horizontalement.

2. Installation de chauffage selon la revendication 1, **caractérisée en ce que** les caloducs sont isolés thermiquement dans la région de la zone de transport qui s'étend depuis directement au-dessus de la zone de réception de chaleur jusqu'à la zone froide en passant par la surface du terrain.

3. Installation de chauffage selon la revendication 1 ou 2, **caractérisée en ce qu'**elle comprend un tuyau collecteur de chaleur et des tuyaux répartiteurs de chaleur, la somme des sections transversales des tuyaux répartiteurs de chaleur étant au total sensiblement égale à la section transversale du tuyau collecteur de chaleur.

4. Installation de chauffage selon l'une des revendications 1 à 3, **caractérisée en ce qu'**elle contient un circuit primaire dans lequel la chaleur est collectée dans un caloduc, un échangeur de chaleur dans lequel la chaleur est transférée à un ou plusieurs caloducs, les circuits secondaires, les circuits secondaires transférant la chaleur aux aiguillages, aux croisements et aux traversées-jonctions, avec possibilité d'utiliser différents fluides de travail dans les différents caloducs.

5. Installation de chauffage selon l'une des revendications 1 à 4, **caractérisée en ce que** le caloduc dans la zone de la réception de chaleur et dans la zone de la distribution de chaleur est constitué de différents métaux et une anode sacrificielle permettant d'éviter une corrosion incontrôlée est installée ou un raccord non - conducteur d'électricité est inséré entre les différents métaux.

6. Installation de chauffage selon l'une des revendications 1 à 5, **caractérisée en ce qu'**il est prévu une surveillance du fonctionnement de l'installation par des capteurs de température sur un tuyau répartiteur de chaleur ou par des capteurs de pression dans le système de tuyaux.

7. Installation de chauffage selon l'une des revendications 1 à 6, **caractérisée en ce que** les tuyaux répartiteurs de chaleur sont démontables et peuvent être séparés du caloduc inférieur collectant la chaleur.

8. Installation de chauffage selon l'une des revendications 1 à 7, **caractérisée en ce que** des tuyaux répartiteurs de chaleur réalisés sous la forme de tubes capillaires sont disposés horizontalement pour la répartition de la chaleur dans la zone froide.

9. Installation de chauffage selon l'une des revendications 8, **caractérisée en ce que** la surface chauffante (16) est fixée sur les tubes capillaires, la surface chauffante entre les traverses étant plus large que sur un coussinet de glissement d'aiguille faisant partie de l'aiguillage.

10. Installation de chauffage selon l'une des revendications 1 à 9, **caractérisée en ce que** les tubes répartiteurs de chaleur conduisant la chaleur sont installés dans la zone située respectivement entre les contre-aiguillages et la lame d'aiguillage.

11. Installation de chauffage selon l'une des revendications 1 à 9, **caractérisée en ce que** les tuyaux répartiteurs de chaleur sont intégrés dans les traverses, dans le cas de traverses, ou dans la voie de circulation sans ballast, dans le cas d'une voie de circulation sans ballast.

12. Installation de chauffage selon l'une des revendications 1 à 11, **caractérisée en ce qu'**au moins un caloduc est rempli de CO₂ utilisé comme fluide de travail.
